# DEMANDE DE BREVET EUROPEEN

(11) **EP 0 595 687 A1**
(43) Date de publication de la demande: **04.05.1994**
(21) Numéro de dépôt: 93402577.6
(22) Date de dépôt: 20.10.1993
(51) Int. Cl.: H02G 3/22

(54) **Bague support de conducteurs électriques destinée à être utilisée pour une traversée de paroi**

(30) Priorité: 30.10.1992 FR 9213014
(71) Demandeur: Société Anonyme SYLEA, F-78180 Montigny le Bretonneux (FR)
(72) Inventeur: Chretien, Louis, F-92500 Rueil Malmaison (FR); Leclerc, Rodolphe, F-78920 Equevilly (FR)
(74) Mandataire: Faber, Jean-Paul

(57) **Abrégé**

Bague support de conducteurs électriques destinée à être utilisée pour une traversée de la paroi, caractérisée en ce qu'elle est constituée de deux éléments (A et B) identiques tournés tête bêche sens dessus dessous, chaque élément étant constitué d'un corps (1) formé de deux joues (11 et 12) séparées par un intervalle (14) correspondant à l'épaisseur de l'une des joues (11, 12), lesdites joues présentant une ouverture (2) en U avec un fond et deux bords parallèles et s'ouvrant sur un de leurs bords et étant reliées entre elles par une entretoise (13) correspondant à la largeur de l'ouverture (2), l'une des joues (12) comportant, en saillie, sur sa face externe, au droit du fond de l'ouverture, un volet (7) relié aux bords de l'ouverture (2) par deux côtés latéraux (8 et 9), tandis que la face externe de l'autre joue (11) présente, au droit du fond de ladite ouverture (2) un volet complémentaire (5).

## Description

La présente invention se rapporte à une bague support de conducteurs électriques destinée à être utilisée pour une traversée de paroi.

La présente invention vise le montage de câblages électriques sur des machines diverses et plus particulièrement sur des véhicules automobiles.

Les différents câblages électriques sont le plus souvent présentés sous la forme d'un faisceau de conducteurs comportant, à leurs extrémités, des connecteurs destinés à être reliés aux différents organes à alimenter. Très souvent le faisceau doit traverser une paroi et généralement, la partie dudit faisceau destinée à traverser la paroi reçoit un élément surmoulé sur le faisceau et qui est destiné à être fixé contre la paroi au droit d'une ouverture de celle-ci destinée à être traversée par le faisceau.

Une telle méthode est relativement chère car elle nécessite de placer les différents conducteurs dans un moule, de surmouler une pièce et de fixer celle-ci contre la paroi.

Cette méthode est également délicate dans la mesure ou les conducteurs peuvent être dégradés lors de l'opération de surmoulage.

De plus, le surmoulage ne permet pas généralement de réaliser une étanchéité entre les conducteurs.

L'un des buts de la présente invention est de réaliser une bague qui remédie à ces divers inconvénients.

La bague, selon l'invention, est destinée à être utilisée pour une traversée de paroi, ladite bague étant caractérisée en ce qu'elle est constituée de deux éléments A et B identiques tournés tête bêche sens dessus dessous, chaque élément étant constitué d'un corps formé de deux joues séparées par un intervalle correspondant à l'épaisseur de l'une des joues, lesdites joues présentant une ouverture en U avec un fond et deux bords parallèles et s'ouvrant sur un de leurs bords et étant reliées entre elles par une entretoise correspondant à la largeur de l'ouverture, l'une des joues comportant, en saillie, sur sa face externe, au droit du fond de l'ouverture un volet relié aux bords de l'ouverture par deux côtés latéraux, tandis que la face externe de l'autre joue présente, au droit du fond de ladite ouverture, un volet complémentaire.

Grâce à cette disposition les éléments sont montés l'un sur l'autre et coulissés et ménagent, de chaque côté, un conduit, les conducteurs traversant le conduit et étant enduits d'une substance pâteuse adhésive de sorte que lors du coulissement la substance pâteuse est comprimée afin que le passage des conducteurs soit étanche.

Afin de faciliter le montage des conducteurs, les volets sont percés, au voisinage de leur base, de trous. Ainsi, on peut utiliser un peigne dont les dents traversent les trous, les conducteurs étant placés par rangées entre les dents, la substance adhésive étant déposée par couches en alternance avec les rangées de conducteurs.

Afin de faciliter l'engagement et le coulissement des éléments, la joue dont une face comporte le volet complémentaire présente, au droit de l'entretoise, sur ladite face externe, une saillie de guidage dont la largeur correspond à la largeur de l'ouverture.

Suivant un détail constructif, la saillie de guidage a une épaisseur qui correspond à l'épaisseur de la joue entre les bords de l'ouverture de laquelle elle s'insère.

Les joues sont percées de trous alignés disposés de manière que, lorsque les deux éléments sont montés l'un sur l'autre, les trous coïncident, les trous étant disposés de manière que, lorsque les deux éléments sont montés l'un sur l'autre, ceux-ci coïncident afin de permettre le passage de vis de fixation.

De préférence, le corps est circulaire.

Enfin, suivant une dernière caractéristique, le volet complémentaire à une longueur correspondant à celle du volet relié aux bords de l'ouverture par les côtés latéraux et une largeur correspondant à l'espace séparant les bords libres de ces derniers.

L'invention va maintenant être décrite avec plus de détails en se référant à un mode de réalisation particulier donné à titre d'exemple seulement et représenté aux dessins annexés, dans lesquels :

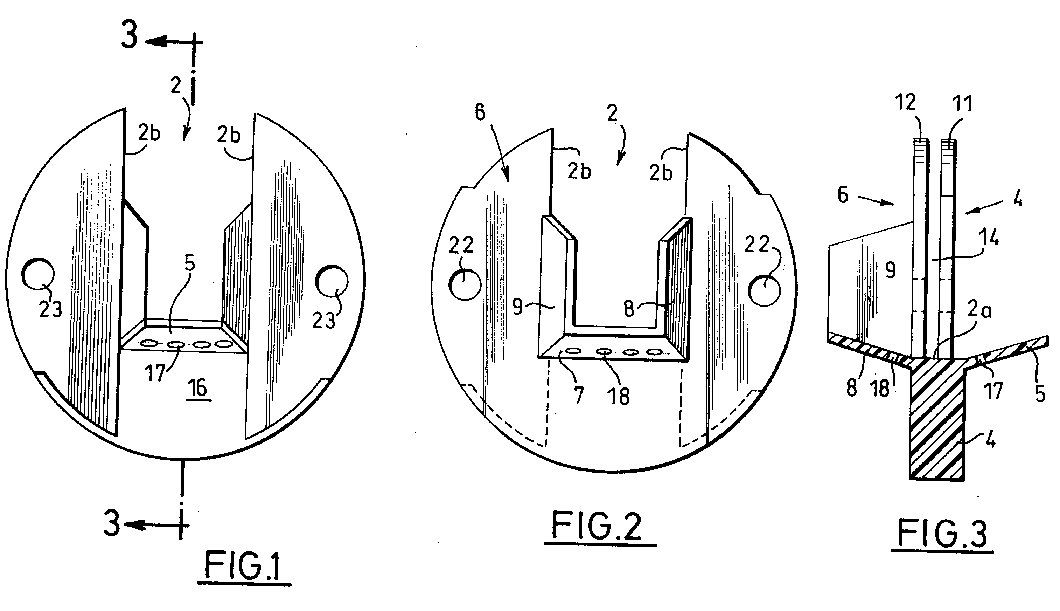

Figure 1 est une vue en plan d'une bague de support de conducteurs électriques, selon l'invention.

Figure 2 est une vue en plan de la face opposée.

Figure 3 est une vue en coupe, suivant la ligne 3-3 de la figure 1.

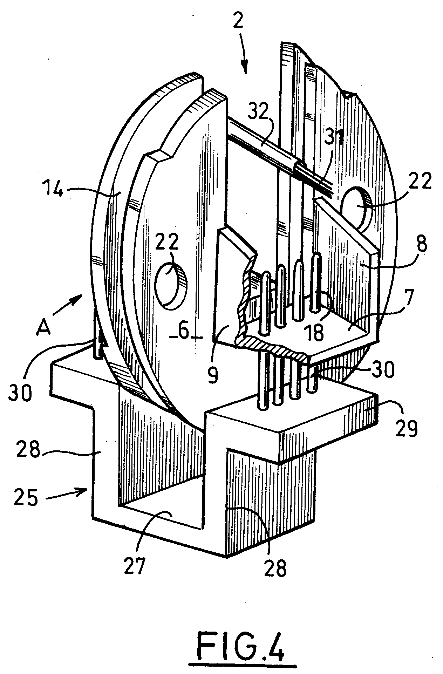

Figure 4 montre en perspective la mise en place des conducteurs.

Figure 5 est une vue en perspective éclatée montrant l'assemblage des éléments constituant la bague. Figure 6 est une vue en perspective montrant le montage terminé.

Figure 7 est une vue en perspective de l'autre face de la bague, le montage étant terminé.

La bague représentée aux figures est constituée d'un corps 1 de forme générale circulaire formé de deux joues 11 et 12 présentant suivant un diamètre une large ouverture 2, qui présente une forme en U avec un fond 2a et deux bords parallèles 2b. Sur une face 4 de la joue 11, au droit du fond 2a, s'érige un volet complémentaire 5.

Sur une face 6 de la joue 12, à partir du fond 2a de l'ouverture 2, s'étend un volet 7 qui est raccordé aux bords 2b de l'ouverture 2 par deux côtés latéraux 8 et 9.

Les joues 11 et 12 sont reliées entre elles par une entretoise 13 qui se situe dans le prolongement de l'ouverture 2 et dont la largeur est égale à l'espace séparant les bords 2b de l'ouverture 2.

Les joues 11 et 12 sont séparées entre elles par un intervalle 14 dont la largeur correspond à l'épaisseur de la joue 11.

Au droit de l'entretoise 13 et du côté de la face 4 s'étend une saillie de guidage 16 qui correspond à la largeur de l'ouverture 2 et dont l'épaisseur de la partie en saillie correspond à l'épaisseur de la joue 12.

Le volet complémentaire 5, au voisinage de sa base, est percé de trous 17, tandis que le volet 7 comporte une série de trous correspondants 18.

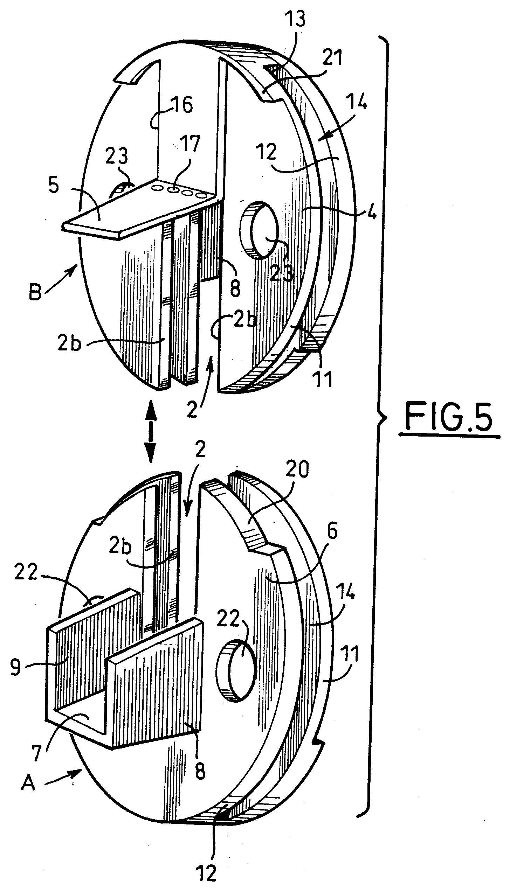

La bague support de conducteur est constituée de deux éléments identiques (voir figure 5) tels que celui qui vient d'être décrit ; l'un des éléments est désigné par la lettre A, et l'autre par la lettre B, l'élément B étant tourné tête bêche sens dessus dessous et monté sur l'élément A de manière que sa joue 11 s'insère dans l'intervalle 14, la saillie de guidage 16 étant coulissante dans l'ouverture 2.

Le bord de la joue 12 adjacent à l'ouverture 2 présente une échancrure 20, tandis que le bord de la joue 11 adjacent à la saillie de guidage est pourvu d'un relief 21 qui coïncide avec l'échancrure 20 afin que, lorsque les deux éléments sont montés l'une sur l'autre, le bord soit régulier.

La joue 6 comporte deux trous 22 qui sont alignés avec des trous 23 de la joue 4.

Le volet complémentaire 5 a une largeur et une longueur telles que, lorsque les deux éléments A et B sont assemblés, il vient s'insérer entre les côtés 8 et 9 et forme ainsi avec le volet 7 et lesdits côtés 8 et 9 un tronc de pyramide.

La bague, selon l'invention, est destinée à être utilisée avec un peigne 25 lors de la réalisation du câblage. Le peigne 25 est formé d'un corps en U présentant une âme 27 et deux ailes 28 qui comportent chacune, à leur extrémité libre, un prolongement 29 s'étendant vers l'extérieur et sur chacun desquels s'érigent une série de dents 30.

Pour réaliser un câblage, on place entre les ailes 28 un élément A de manière que les dents 30 d'un prolongement 29 traversent les trous 18 et les dents 30 de l'autre prolongement 29 des trous 17. Dans la surface délimitée par les dents 30, d'une part, et les bords 2b, d'autre part, on dépose sur le fond 2a une première couche de substance pâteuse adhésive puis une première rangée de conducteurs 31 maintenus sensiblement à distance les uns des autres et des bords 2b par les dents 30, puis à nouveau de nouvelles couches de substance pâteuse adhésive et de nouvelles rangées de conducteurs à concurrence de remplir l'ouverture 2 et en finissant par une couche de substance pâteuse adhésive. Puis on pose l'élément B sur l'élément A afin que le volet 5 s'insère entre les côtés 8 et 9, tandis que du côté de la face 6 dudit élément B les côtés 8 et 9 viennent coopérer avec le volet 5 de l'élément A. Ainsi, les couches de substances pâteuses se trouvent comprimées, les conducteurs étant emprisonnés de façon étanche.

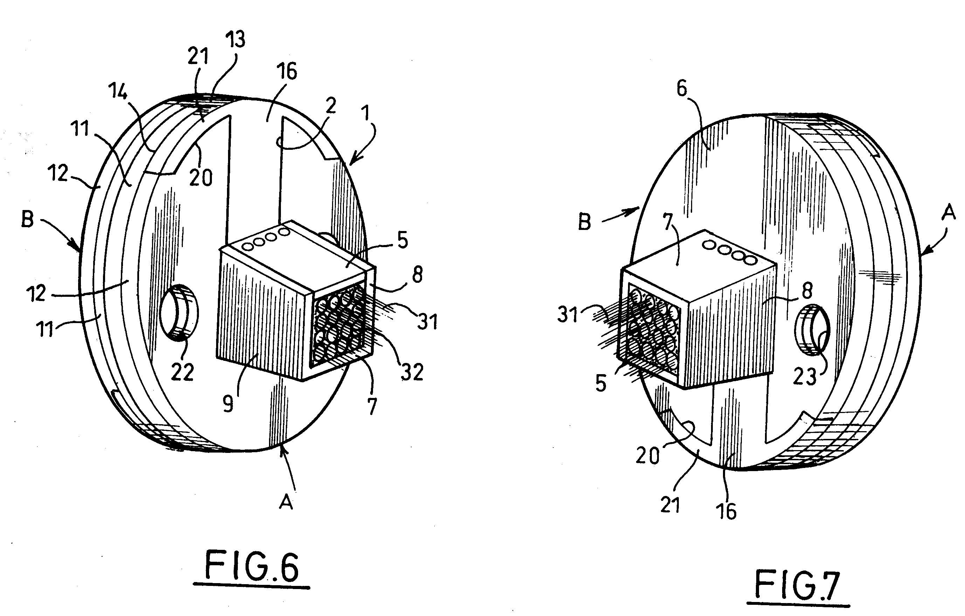

Dans cette position (voir figures 6 et 7) les trous 22 et 23 coïncident et les différents conducteurs 31 se trouvent noyés dans une épaisseur 32 et guidés dans les deux troncs de pyramide formés de chaque côté de la bague.

Dans certains cas une partie des conducteurs pourra être remplacée par une cale de volume équivalent dans la mesure où la bague serait employée pour des câblages de moindre importance.

Les conducteurs qui dépassent de chaque côté des troncs de pyramide sont, comme cela se fait usuellement enrubannés et la bague ainsi montée est fixée sur une paroi par des vis traversant les trous 22 et 23 se vissant dans ladite paroi, avec éventuellement l'interposition d'un joint, l'un des troncs de pyramide traversant un trou de ladite paroi.

Bien entendu, l'invention n'est pas limitée au mode de réalisation qui vient d'être décrit et représenté. On pourra y apporter de nombreuses modifications de détail sans sortir pour cela du cadre de l'invention.

## Revendications

1. Bague support de conducteurs électriques destinée à être utilisée pour une traversée de paroi, caractérisée en ce qu'elle est constituée de deux éléments (A et B) identiques tournés tête bèche sens dessus dessous, chaque élément étant constitué d'un corps (1) formé de deux joues (11 et 12) séparées par un intervalle (14) correspondant à l'épaisseur de l'une des joues (11, 12), lesdites joues présentant une ouverture (2) en U avec un fond et deux bords parallèles et s'ouvrant sur un de leur bord et étant relié entre elles par une entretoise (13) correspondant à la largeur de l'ouverture (2), l'une des joues (12) comportant, en saillie, sur sa face externe, au droit du fond de l'ouverture, un volet (7) relié aux bords de l'ouverture (2) par deux côtés latéraux (8 et 9), tandis que la face externe de l'autre joue (11) présente, au droit du fond de ladite ouverture, un volet complémentaire (5).

2. Bague support de conducteurs électriques, selon la revendication 1, caractérisée en ce que les volets (7, 5) sont percés, au voisinage de leur base, de trous (17, 18).

3. Bague support de conducteurs électriques, selon la revendication 1, caractérisée en ce que la joue (11) dont une face externe (4) comporte le volet complémentaire (5) présente, au droit de l'entretoise (13), sur sa dite face externe (4), une saillie de guidage (16) dont la largeur correspond à la largeur de l'ouverture (2).

4. Bague support de conducteurs électriques, selon la revendication 3, caractérisée en ce que la saillie de guidage (16) a une épaisseur qui correspond à l'épaisseur de la joue (12) entre les bords de l'ouverture (2) dans laquelle elle s'insère.

5. Bague support de conducteurs électriques, selon la revendication 1, caractérisée en ce que les joues (11 et 12) sont percées de trous alignés (22 et 23) disposés de manière que, lorsque les deux éléments (A et B) sont montés l'un sur l'autre, les trous coïncident.

6. Bague support de conducteurs électriques, selon la revendication 1, caractérisée en ce que le corps (1) est circulaire.

7. Bague support de conducteurs électriques, selon la revendication 1, caractérisée en ce que le volet (C) complémentaire (5) a une longueur correspondant à celle du volet (7) relié aux bords (2b) de l'ouverture (2) par les côtés latéraux (8, 9) et une largeur correspondant à l'espace séparant les bords libres de ces derniers.
